(19) Europäisches Patentamt / European Patent Office / Office européen des brevets

(11) **EP 4 292 943 B1**

(12) **FASCICULE DE BREVET EUROPEEN**

(45) Date de publication et mention de la délivrance du brevet:
**22.01.2025 Bulletin 2025/04**

(21) Numéro de dépôt: **23177896.0**

(22) Date de dépôt: **07.06.2023**

(51) Classification Internationale des Brevets (IPC):
**G05B 23/02** *(2006.01)*   **G07C 5/00** *(2006.01)*
**B64D 45/00** *(2006.01)*

(52) Classification Coopérative des Brevets (CPC):
**B64D 45/00; G05B 23/0283;** B64D 2045/0085;
G05B 2219/45071

(54) **PROCEDE DE DIAGNOSTIC AUTOMATIQUE POUR AU MOINS UN MOTEUR EQUIPANT UN AERONEF, AERONEF ET ENSEMBLE METTANT EN OEUVRE LE PROCEDE**

AUTOMATISCHES DIAGNOSEVERFAHREN FÜR MINDESTENS EIN TRIEBWERK IN EINEM FLUGZEUG, FLUGZEUG UND ANORDNUNG ZUR DURCHFÜHRUNG DES VERFAHRENS

AUTOMATIC DIAGNOSTIC METHOD FOR AT LEAST ONE ENGINE EQUIPPING AN AIRCRAFT, AIRCRAFT AND ASSEMBLY IMPLEMENTING THE METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.06.2022 FR 2205801**

(43) Date de publication de la demande:
**20.12.2023 Bulletin 2023/51**

(73) Titulaire: **Airbus Helicopters**
**13725 Marignane Cedex (FR)**

(72) Inventeur: **ESTERLE, Florent**
**13300 SALON DE PROVENCE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
FR-A1- 3 006 785       US-A1- 2006 089 761
US-A1- 2016 171 796   US-A1- 2021 055 717
US-B1- 10 814 883

**Description**

La présente invention concerne un procédé de diagnostic automatique pour suivre une évolution d'un état de santé d'au moins un moteur équipant un aéronef tel un avion ou un giravion. Un tel moteur peut être avantageusement un turbomoteur entraînant en rotation au moins une hélice ou un rotor participant à la sustentation et/ou à la propulsion de l'aéronef dans l'air. En outre, un tel moteur peut être qualifié de « moteur installé » et ses performances prennent alors en compte notamment une entrée d'air frais, une tuyère, une vitesse de déplacement de l'aéronef ou en encore des prélèvements de puissance annexes. A des fins de simplifications pour la suite, le terme de moteur désignera ainsi un tel moteur installé dans un aéronef.

En outre, un contrôle de santé peut être réalisé pour vérifier que les performances d'un moteur n'ont pas chutées en dessous d'une valeur acceptable.

En effet, un moteur d'aéronef peut développer une puissance courante qui diminue avec le vieillissement et les conditions d'utilisation de ce moteur. La puissance courante d'un moteur diminue donc au fur et à mesure de son utilisation et des conditions extérieures d'utilisation.

Un indice de santé moteur peut alors être calculé pour pouvoir vérifier que le moteur est à même de délivrer une puissance supérieure à une puissance minimale garantie.

Par calculs ou par essais, des courbes de puissance disponible d'un moteur peuvent alors être déterminées par exemple en fonction de l'altitude de l'aéronef et de la température de l'air extérieur à l'aéronef, et cela pour chacun des régimes d'utilisation d'un moteur. De même, la durée de vie du moteur ainsi que la puissance minimale garantie pour chaque régime peuvent être déterminées. Une telle puissance minimale garantie correspond alors à la puissance que fournira le moteur lorsqu'il aura atteint sa durée de vie, un tel moteur étant dénommé « moteur vieilli » par commodité dans la suite du texte.

Autrement dit, une telle puissance disponible « dispose » d'un niveau minimum garanti auquel sont calculées les performances d'un aéronef correspondant au manuel de vol. Un contrôle de santé moteur permet alors de garantir que la performance de la motorisation reste conforme aux hypothèses utilisées dans l'élaboration du manuel de vol de l'aéronef, et au-delà évaluer, en utilisant des méthodes prédictives, le moment dans le futur où cela pourrait ne plus être le cas ainsi qu'à détecter toute panne qui pourrait affecter l'ensemble de la motorisation installée sur l'aéronef.

Pour vérifier que le moteur fonctionne correctement, il convient donc de réaliser un contrôle de santé pour s'assurer que ce moteur a des performances supérieures ou égales aux performances d'un moteur vieilli.

Tel que décrit dans le document EP 2 623 748, il est ainsi connu de réaliser une surveillance automatique en vol d'un ou de plusieurs paramètres de fonctionnement d'un moteur de giravion pour contrôler l'état de santé de ce moteur.

Cependant, cette surveillance en vol peut être mise en œuvre au maximum une fois par heure de vol car l'acquisition des paramètres de fonctionnement du moteur peut nécessiter des actions, comme par exemple la coupure momentanée du chauffage de la cabine du giravion. De telles actions peuvent être contraignantes pour le confort de l'équipage, mais également pour l'organe du circuit d'air qui est sollicité pour effectuer ces actions de manière répétée.

En effet, il est nécessaire de couper le chauffage de la cabine afin de placer le moteur dans un état comparable au modèle générique non installé.

Le document EP 3 217 242 décrit quant à lui une utilisation des données enregistrées d'un aéronef pendant le vol pour prédire un comportement de moteur d'aéronef.

Il décrit notamment l'utilisation d'un modèle probabiliste pour déterminer l'état de santé d'un moteur d'aéronef. Ce procédé permet notamment de prédire l'évolution de cet état de santé moteur en fonction d'une valeur de température de gaz d'échappement et du dépassement par cette température de gaz d'échappement d'une valeur maximale de seuil lors du vol de l'aéronef.

Cependant, un tel procédé se limite donc au suivi de la température de gaz d'échappement du moteur pour déterminer le niveau santé du moteur. Ainsi, à l'instar du document EP 2 623 748, le débit d'air pour le chauffage de la cabine prélevé sur le moteur n'est pas mesuré pour le contrôle de santé moteur et donc pas pris en compte. Il est par conséquent également nécessaire de couper le chauffage lors de la mesure de la température de gaz d'échappement du moteur.

Le document FR 3 006 785 décrit quant à lui des procédés de création d'une base de données et d'élaboration d'une carte d'états de fonctionnement de moteurs d'aéronefs et un procédé de surveillance du fonctionnement d'un moteur d'aéronef associé.

En outre, un premier procédé de création d'une base de données d'états de fonctionnement d'une flotte de moteurs d'aéronefs est divulgué. Ce premier procédé comprend les étapes suivantes :

- acquérir des paramètres caractérisant un état de fonctionnement de moteurs de ladite flotte de moteurs ;

- acquérir au moins une information de dégradation indicative d'un niveau de dégradation d'au moins un moteur parmi ladite flotte de moteurs ;

- stocker dans ladite base de données des séries de paramètres, chaque série de paramètres comprenant des paramètres caractérisant un état de fonctionnement d'un desdits moteurs et le cas échéant au moins une information de dégradation indicative d'un niveau de dégradation du moteur.

Chaque série de paramètres comprend des paramètres déterminés à partir de mesures parmi une température de gaz d'échappement, un débit de carburant, une vitesse de rotation d'un arbre basse pression, une vitesse de rotation d'un arbre haute pression, et des températures et pressions en différents points du moteur.

Un deuxième procédé concerne l'élaboration d'une carte d'états de fonctionnement de moteurs d'aéronefs à partir d'un fond de carte établi à l'aide d'une base de données d'états de fonctionnement d'une flotte de moteurs.

Ce fond de carte comprend un ensemble de cellules, chaque cellule étant décrite par un vecteur-code proche d'une ou plusieurs séries de paramètres stockées dans la base de données.

En outre, un calculateur définit des classes de cellules en regroupant des cellules du fond de carte, les classes étant définies en fonction d'une distance entre cellules et/ou des informations de dégradation comprises dans les séries de paramètres proches des vecteurs-code de cellules du fond de carte.

Le fond de carte peut être établi à partir de la base de données d'états de fonctionnement selon la technique de cartographie auto-adaptative de Kohonen. Selon le deuxième procédé, le calculateur permet d'attribuer à une cellule de la carte au moins un taux de dégradation relatif à une information de dégradation, correspondant à la proportion des séries de paramètres comprenant l'information de dégradation parmi les séries de paramètres proches du vecteur-code de la cellule.

De plus, les classes de cellules peuvent être définies par les étapes de :

- création de classes candidates en fonction des distances intercellules ;

- création de classes, chaque classe regroupant un ensemble de cellules adjacentes, l'ensemble de cellules appartenant au fond de carte précédemment décrit étant formé par l'intersection d'une union de classes candidates avec un ensemble de cellules adjacentes présentant chacune un taux de dégradation relatif à une même information de dégradation supérieur à un seuil déterminé.

Un tel deuxième procédé permet alors de suivre les tendances des taux de dégradation des moteurs appartenant à une flotte d'aéronefs.

La présente invention a alors pour objet de proposer un procédé permettant de s'affranchir des limitations mentionnées ci-dessus. En outre, l'invention permet de calculer un niveau de santé d'un moteur de manière plus fine pour chaque aéronef en fonction de son utilisation réelle.

L'invention se rapporte donc à un procédé de diagnostic automatique pour suivre un état de santé d'au moins un moteur équipant un aéronef, le procédé comportant les étapes suivantes :

- acquisition périodique en vol d'une pluralité de données de vol avec des senseurs, la pluralité de données de vol étant représentative d'une pluralité de paramètres physico-chimiques,

- identification avec un contrôleur, à partir de la pluralité de données de vol, d'au moins une phase de contrôle de santé moteur prédéterminée et isolement avec le contrôleur d'une séquence de données significatives parmi la pluralité de données de vol produites durant la ou les phases de contrôle de santé moteur, les données significatives d'une séquence étant acquises successivement, et

- pour chaque phase de contrôle de santé moteur, calcul avec le contrôleur d'au moins un indice de santé moteur en fonction d'au moins un paramètre de contrôle du ou des moteurs parmi la pluralité de paramètres physico-chimiques.

Selon l'invention, un tel procédé est remarquable en ce qu'il comporte les étapes suivantes :

- pour chaque indice de santé moteur, génération avec le contrôleur d'un point d'une cartographie à au moins une dimension, chaque point associant l'indice de santé moteur à au moins une valeur d'au moins un paramètre d'état prédéterminé parmi la pluralité de paramètres physico-chimiques, chaque paramètre d'état prédéterminé correspondant à une dimension de la cartographie, chaque valeur correspondant respectivement à une valeur du ou des paramètres d'état à un instant de la séquence de données significatives pour lequel l'indice de santé moteur est calculé,

- regroupement avec le contrôleur des points de la cartographie dans au moins une classe d'intérêt, chaque classe d'intérêt correspondant à un groupe de points espacés les uns des autres dans la cartographie d'une distance maximale prédéterminée,

- surveillance avec le contrôleur des indices de santé moteur correspondant aux points de la ou des classes d'intérêt, et

- génération avec un alerteur d'un signal d'information en fonction des indices de santé moteur surveillés lors de la surveillance.

Autrement dit, l'acquisition périodique d'une pluralité de données de vol permet d'effectuer un enregistrement d'une multitude de données de vol par exemple au moyen d'un système de suivi de santé et d'utilisation d'un moteur. Un tel système de suivi peut être avantageusement embarqué sur l'aéronef. Ces systèmes embarqués sont généralement désignés par l'expression en langue anglaise « Health and Usage Monitoring System » ou par son acronyme « HUMS » et permettent donc de collecter constamment et automatiquement des données de vol de l'aéronef.

Ces données de vol représentatives d'une pluralité de paramètres physico-chimiques peuvent ainsi comporter des attitudes de l'aéronef, des vitesses ou accélérations de l'aéronef, des altitudes de l'aéronef, des vitesses de rotation du moteur, des couples moteur, ainsi que des températures, des pressions ou des débits se rapportant à des fluides circulant dans l'aéronef, dans un moteur ou encore à l'air extérieur.

L'identification d'au moins une phase de contrôle de santé moteur prédéterminée peut être prédéterminée par exemple en fonction de critères prédéterminés et permet alors d'écarter des données non significatives pour ne conserver que des séquences de données significatives parmi la pluralité de données de vol issues de l'acquisition périodique d'une pluralité de données de vol.

Pour toutes les phases de contrôle de santé moteur, le contrôleur calcule alors un ou plusieurs indices de santé moteur selon une loi prédéterminée.

Par exemple, de tels indices de santé moteur peuvent être déterminés en calculant une marge de couple, de puissance ou de température des gaz de combustion issus du moteur. Cette marge correspond par exemple à la différence entre une valeur courante de couple, de puissance ou de température avec une valeur minimale garantie correspondant à un moteur vieilli en tenant compte de l'impact lié à l'installation du moteur dans l'aéronef.

En outre, une fois les points générés avec le contrôleur, le regroupement des points en une classe ou en différentes classes distinctes s'effectue en comparant les distances séparant chaque point généré avec un barycentre de chaque classe. Cette classe ou ces classes sont donc prédéterminées par exemple par des vols de test, des simulations ou encore par des vols réalisés par des utilisateurs d'un même type d'aéronef. En outre, cette classe ou ces classes peuvent également être actualisées en fonction d'un type de mission ou d'une exploitation particulière de l'aéronef.

En outre, les classes peuvent alors avantageusement être déterminées en fonction des valeurs de paramètres d'état correspondant à chaque indice de santé moteur calculé pour un aéronef particulier.

De plus, les cartographies peuvent être définies dans un espace à N dimensions supérieur ou égal à 1, N étant le nombre de paramètres d'état prédéterminés par exemple par une méthode de calcul désignée généralement par l'expression « machine à vecteurs de support » ou en langue anglaise par l'expression « support-vector machine », notamment en utilisant une fonction noyau, un tel noyau pouvant être linéaire. Une telle méthode de calcul constitue en effet une technique d'apprentissage supervisé destinée à résoudre des problèmes de régression.

Dans ce cas, les coordonnées d'un point C de la cartographie peuvent s'écrire $\begin{bmatrix} C1 \\ \vdots \\ CN \end{bmatrix}$ et les coordonnées du barycentre B peuvent s'écrire $\begin{bmatrix} B1 \\ \vdots \\ BN \end{bmatrix}$ .

Pour chacun des N paramètres d'état prédéterminés, une distance maximale prédéterminée Dln séparant les points C du barycentre B peut être mémorisée sous la forme $\begin{bmatrix} Dl1 \\ \vdots \\ DlN \end{bmatrix}$ . Cette distance maximale prédéterminée Dln peut être définie d'après l'influence de chaque paramètre d'état prédéterminé sur le calcul des indices de santé moteur.

Pour chacun des N paramètres, on peut alors calculer la distance normée Dn entre le barycentre B d'une classe et chaque point C. Une telle distance normée s'écrit alors $\begin{bmatrix} D1 \\ \vdots \\ DN \end{bmatrix}$ avec $Dx = \frac{Cx - Bx}{Dlx}$ et x variant de 1 à N.

A partir des N distances Dn, on calcule alors la norme du vecteur $(\overrightarrow{BC})$, une telle norme s'exprimant sous la forme $$\left\| \overrightarrow{BC} \right\| = \sqrt{\sum_{i=1}^{N} Di^2} \ .$$

Un point C d'une cartographie appartient alors à une classe de barycentre B si $\left\| \overrightarrow{BC} \right\| \leq 1$.

Par exemple, les paramètres d'état prédéterminés peuvent être au nombre de deux et par conséquent la cartographie de points comporte en abscisse un première paramètre d'état et en ordonnée un second paramètre d'état.

En outre, le calcul des indices de santé moteur peut être réalisé très fréquemment et n'engendre aucune contrainte pour le confort des passagers. Un tel procédé permet ainsi d'effectuer une quantité importante de calculs des indices de santé moteur et de ne prendre en compte que les calculs les plus représentatifs en vue de fournir des services supplémentaires aux utilisateurs de l'aéronef ou aux opérateurs utilisant une flotte d'aéronefs de ce type.

En outre, le calcul de la pluralité d'indices de santé moteur peut utiliser des paramètres d'état prédéterminés, et/ou une ou des classes, spécifiquement pour un aéronef ou une variante d'aéronef en particulier et/ou pour une base de décollage à partir de laquelle l'aéronef opère différentes missions.

Par ailleurs, la surveillance des variations dans le temps des indices de santé moteur peut être mise en œuvre classe par classe.

Enfin, la génération d'une information en fonction des indices de santé moteur appartenant à la même classe peut par exemple consister en une information transmise à un pilote de l'aéronef sous la forme d'un message textuel généré par un afficheur ou encore en un message sonore généré par un haut parleur. En outre, l'information générée peut également consister en une représentation graphique des variations des indices dans le temps sous la forme de courbes ou de graphes présentés sur un afficheur, tel un écran d'ordinateur ou une tablette par exemple.

De manière avantageuse, le procédé peut comporter une identification avec un contrôleur d'identification de ladite au moins une classe d'intérêt parmi au moins deux classes distinctes, la ou les classes d'intérêt étant identifiées en fonction d'au moins un paramètre d'identification choisi parmi le groupe comportant une fréquence d'apparition d'un point dans la ou les classes considérées et une répartition des points dans la cartographie.

Par suite, une telle identification peut être mise en œuvre préalablement à l'étape de regroupement des points de la cartographie. Le procédé peut alors surveiller tous les indices de santé moteur appartenant à une ou des classes d'intérêt identifiées en amont à partir d'autres données de vol issues du même aéronef, d'un autre aéronef ou encore d'une flotte d'aéronefs.

Certaines classes peuvent être éventuellement écartées et non prises en compte si les nombre de points d'une même classe est insuffisant.

Avantageusement, le procédé peut comporter une prédétermination du ou des paramètres d'état prédéterminés, la prédétermination comportant les sous étapes suivantes :

- acquisition périodique préliminaire durant au moins un vol préliminaire d'une pluralité de données préliminaires de vol avec des senseurs, la pluralité de données préliminaires de vol étant représentative d'une pluralité de paramètres physico-chimiques,
- calcul avec le contrôleur de prédétermination d'une pluralité d'indices préliminaires de santé moteur en fonction d'une pluralité de valeurs du ou des paramètres de contrôle du ou des moteurs parmi la pluralité de paramètres physico-chimiques,
- génération avec le contrôleur de prédétermination d'une base de donnée comportant la pluralité de valeurs d'au moins un paramètre de contrôle préliminaire associée à la pluralité d'indices préliminaires de santé moteur correspondante,
- génération avec le contrôleur de prédétermination, à partir d'une corrélation entre la pluralité d'indices préliminaires de santé moteur et la pluralité de valeurs du ou des paramètres de contrôle préliminaire du ou des moteurs contenues dans la base de donnée, d'une pluralité de modèles de régression linéaire, chaque modèle de régression linéaire étant associé à un paramètre de contrôle préliminaire ou à une combinaison de plusieurs paramètres de contrôle préliminaire, et
- identification avec le contrôleur de prédétermination du ou des paramètres d'état prédéterminés parmi le paramètre de contrôle préliminaire ou la combinaison de plusieurs paramètres de contrôle préliminaire correspondant à chaque modèle de régression linéaire, l'identification étant fonction d'une part d'une qualité de prédiction de la pluralité de modèles de régression linéaire et d'autre part d'un nombre de paramètres de contrôle préliminaire.

Une telle prédétermination du ou des paramètres d'état prédéterminés peut par exemple être réalisée une fois avant la mise en œuvre du procédé. La prédétermination du ou des paramètres d'état prédéterminés peut également être mise en œuvre plusieurs fois afin de mettre à jour le regroupement des points en classes si par exemple le nombre de points des cartographies ne pouvant être associés à une classe dépasse une valeur prédéterminée.

En pratique, le contrôleur et le contrôleur de prédétermination peuvent être distincts l'un de l'autre ou être formés par un même contrôleur.

Par exemple, les paramètres d'état prédéterminés peuvent être au nombre de deux et par conséquent chaque cartographie comporte alors en abscisse un première paramètre d'état et en ordonnée un second paramètre d'état.

Une fois la base de données générée, on peut alors réaliser des opérations de calcul statistique sur la corrélation entre la pluralité de valeurs du ou des paramètres de contrôle et la pluralité d'indices préliminaires de santé moteur.

Par exemple, ces calculs peuvent comprendre un calcul d'une valeur P correspondant à la probabilité pour un modèle statistique donné sous l'hypothèse nulle d'obtenir la même valeur ou une valeur encore plus extrême que celle observée. Un tel calcul permet alors d'identifier si la pluralité d'indices préliminaires de santé moteur calculés est bien significative.

On peut alors classer chaque paramètre de contrôle préliminaire et chaque combinaison de paramètres de contrôle préliminaire en fonction des différentes valeurs P calculées. Pour un même nombre d'un ou plusieurs paramètres de contrôle, on identifie alors le meilleur paramètre de contrôle préliminaire et les meilleures combinaisons de paramètres de contrôle préliminaire qui présentent la valeur P la plus faible correspondant au résultat le plus significatif.

Pour le meilleur paramètre de contrôle préliminaire et chaque meilleure combinaison de X paramètres de contrôle préliminaire, on effectue un calcul de la régression correspondante à l'aide par exemple d'un algorithme type « SVM regression » ou de type « gradient boosting ».

Ainsi, à chaque régression peut être associé un coefficient de détermination linéaire dit « de Pearson », noté $R^2$ ou score $R^2$ exprimé en pourcentage. Un tel coefficient de détermination linéaire est alors représentatif de la qualité de la prédiction d'une régression linéaire.

Ce coefficient de détermination linéaire permet notamment de fournir une indication relative à la fidélité d'un indice préliminaire de santé moteur modélisé par la régression par rapport à l'indice préliminaire de santé moteur original.

De manière connue, plus ce score $R^2$ est grand, plus la qualité de la prédiction de la régression est importante.

Parmi l'ensemble des régressions et leurs scores $R^2$ associés, on effectue alors un choix de la régression représentative du meilleur compromis entre les scores $R^2$ les plus grand et le plus faible nombre de paramètres de contrôle.

Par exemple, si les scores $R^2$ de deux régressions sont proches l'un de l'autre d'une valeur de 2 ou 3%, on choisira la régression correspondant à un unique paramètre de contrôle préliminaire ou à la combinaison présentant le plus petit nombre de paramètres de contrôle préliminaire.

Ainsi, l'identification du ou des paramètres d'état prédéterminés permet de garantir une dispersion maximale entre chaque classe.

Par ailleurs, le ou les vols préliminaires peuvent comporter une pluralité de vols réalisés avec un ou plusieurs aéronefs.

En d'autres termes, une flotte de plusieurs aéronefs, par exemple d'une même famille d'aéronefs, peuvent être utilisés pour mettre en œuvre l'étape de prédétermination du ou des paramètres d'état prédéterminés.

Avantageusement, la surveillance des indices de santé moteur peut comporter un calcul d'une pente d'une courbe décrite par les indices de santé moteur d'une même classe en fonction du temps et une comparaison de la pente avec une valeur de seuil prédéterminée, la génération du signal d'information étant effectuée lorsque la pente franchit la valeur de seuil prédéterminée.

En outre, une telle génération du signal d'information peut alors consister à indiquer une durée maximale avant de procéder à une opération de maintenance de l'aéronef. Une telle durée maximale peut être par exemple déterminée par extrapolation du temps restant avant que les indices de santé moteur atteignent une valeur prédéfinie. En outre, un dépassement de la valeur de seuil prédéterminée par la pente peut être réalisé à la hausse comme à la baisse.

De manière complémentaire ou alternative, la surveillance des indices de santé moteur peut comporter une identification d'une discontinuité d'une courbe décrite par les indices de santé moteur d'une même classe en fonction du temps, la génération du signal d'information étant effectuée lorsque la discontinuité est identifiée.

Dans ce cas, la génération du signal d'information peut alors consister à indiquer un besoin immédiat de procéder à une opération de maintenance de l'aéronef.

Toujours de manière complémentaire ou alternative, la surveillance des indices de santé moteur peut comporter une comparaison entre une valeur des indices de santé moteur et une autre valeur de seuil prédéterminée, la génération du signal d'information étant effectuée lorsque la valeur des indices de santé moteur franchit cette autre valeur de seuil prédéterminée.

A l'instar de la pente, un tel dépassement de l'autre valeur de seuil prédéterminée par la valeur des indices de santé moteur peut également être réalisée à la hausse ou à la baisse.

Selon une première variante de l'invention, la surveillance des indices de santé moteur peut être réalisée périodiquement avec une période prédéterminée.

Par exemple, cette surveillance peut être réalisée une fois par heure, une fois par jour, voire de manière hebdomadaire.

Selon une seconde variante de l'invention, la surveillance des indices de santé moteur peut être réalisée suite à chaque calcul des indices de santé moteur.

Dans ce cas, la surveillance dépend directement de l'utilisation de l'aéronef et de sa capacité à effectuer des phases de vol correspondant à des phases de contrôle de santé moteur.

Quelle que soit la variante mise en œuvre, à chaque indice de santé moteur calculé, un compteur de périodicité des calculs des indices de santé moteur peut être réinitialisé.

En pratique, le procédé peut comporter, pour chaque classe, une détermination d'un barycentre des points et une pondération assignant un poids à chaque indice de santé moteur, le poids étant fonction d'une ou plusieurs distances séparant le ou les points du barycentre, la surveillance des indices de santé moteur étant opérée sous la dépendance des poids de chaque indice de santé moteur en réalisant une courbe pondérée représentative des indices de santé moteur et des poids associés, la génération du signal d'information étant effectuée lorsqu'une pente de la courbe pondérée franchit une valeur de seuil prédéterminée, lorsqu'une discontinuité de la courbe pondérée est identifiée ou lorsqu'une valeur pondérée des indices de santé moteur franchit une autre valeur de seuil prédéterminée.

Autrement dit, une telle pondération permet de favoriser les indices de santé moteur les plus proches les uns des autres autour d'un centre de classe et donc les indices de santé moteur les plus représentatifs d'une classe afin de limiter la dispersion.

Avantageusement, le procédé peut comporter une mémorisation de la pluralité de données de vol dans une mémoire embarquée dans l'aéronef pendant la phase de vol de l'aéronef.

Par suite, la pluralité de données de vol peut être stockée dans l'aéronef pour être par exemple transmises ou utilisées ultérieurement par le contrôleur.

Dans ce cas, le procédé peut comporter une transmission de la pluralité de données de vol de la mémoire embarquée dans l'aéronef vers au moins une station sol.

Une telle transmission peut être réalisée une fois l'aéronef posé au sol par voie filaire, non filaire ou encore à l'aide d'une mémoire amovible qui est extraite de l'aéronef et connectée avec une station sol.

Une telle transmission peut également être réalisée lors du vol de l'aéronef au moyen d'un émetteur agencé sur l'aéronef et d'un récepteur connecté à une station sol. L'émetteur et le récepteur communiquent alors entre eux par un procédé de communication sans fil, tel un procédé de communication de téléphonie mobile (GSM, UMTS, GPRS..), satellitaire ou autres.

La présente invention a aussi pour objet un aéronef équipé d'au moins un moteur, de senseurs pour acquérir une pluralité de données de vol, d'un contrôleur et d'un alerteur.

Selon l'invention, un tel aéronef est remarquable en ce que les senseurs, le contrôleur et l'alerteur de l'aéronef sont configurés pour mettre en œuvre le procédé de diagnostic automatique précité. Un tel aéronef peut être un avion ou encore un giravion et embarquer, ou non, des personnes ou un pilote à son bord.

La présente invention vise également un ensemble comportant au moins une station sol et au moins un aéronef équipé d'au moins un moteur et de senseurs pour acquérir une pluralité de données de vol, ladite au moins une station sol comportant un contrôleur et un alerteur.

Selon l'invention, un tel ensemble est remarquable en ce que les senseurs, le contrôleur et l'alerteur de l'ensemble sont configurés pour mettre en œuvre le procédé de diagnostic automatique précité.

L'invention et ses avantages apparaîtront avec plus de détails dans le cadre de la description qui suit avec des exemples donnés à titre illustratif en référence aux figures annexées qui représentent :

la figure 1, une vue schématique d'un aéronef conforme à l'invention,

la figure 2, un vue schématique d'un ensemble conforme à l'invention,

la figure 3, un logigramme illustrant un premier exemple de procédé de diagnostic automatique conforme à l'invention,

la figure 4, un logigramme illustrant des sous étapes du premier exemple de procédé de diagnostic automatique, conformément à l'invention,

la figure 5, un logigramme illustrant un deuxième exemple de réalisation d'un procédé de diagnostic automatique conforme à l'invention,

la figure 6, un logigramme illustrant un troisième exemple de réalisation d'un procédé de diagnostic automatique conforme à l'invention,

la figure 7, un schéma illustrant une première cartographie obtenue par un procédé de diagnostic automatique conforme à l'invention, et

la figure 8, un schéma illustrant un regroupement en classes d'une cartographie obtenue par un procédé de diagnostic automatique conforme à l'invention.

Les éléments présents dans plusieurs figures distinctes sont affectés d'une seule et même référence.

Comme déjà évoqué, la présente invention se rapporte au domaine des giravions et plus précisément au domaine de la maintenance prédictive d'un ou de plusieurs moteurs équipant un giravion.

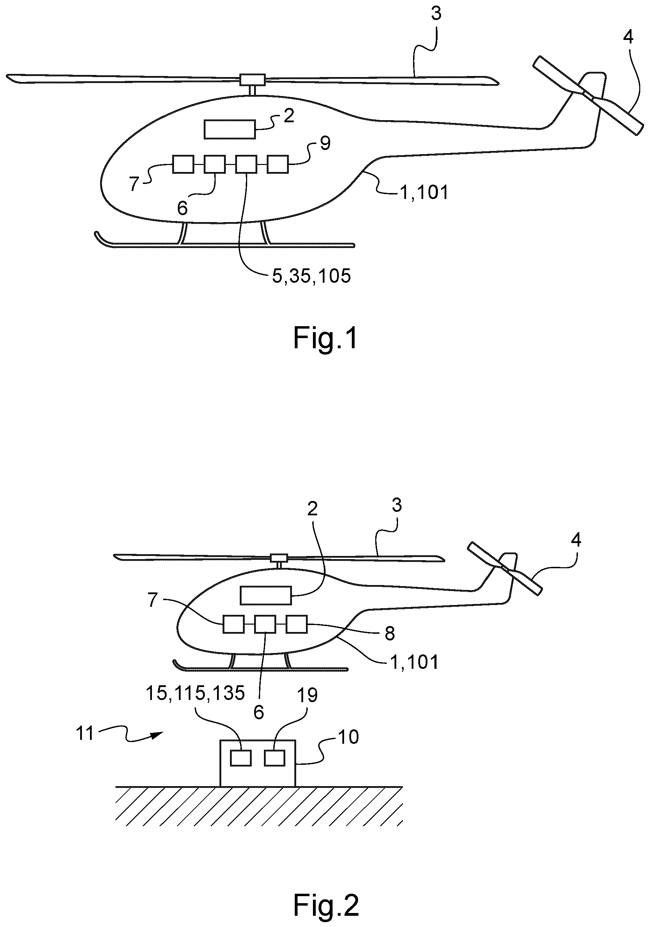

Tel que représenté à la figure 1, un aéronef 1 comporte ainsi au moins un moteur 2 destiné à entraîner en rotation au moins un rotor 3, 4. Dans l'exemple illustré, l'aéronef 1 peut être un giravion. Le rotor 3, 4 peut ainsi par exemple comporter un rotor principal 3 participant à la sustentation et la propulsion de l'aéronef 1 dans l'air et un rotor arrière 4 participant au contrôle des mouvements en lacet de l'aéronef 1 et contrant le couple transmis à un fuselage généré par la rotation du rotor principal 3.

En outre, afin de réaliser la maintenance du moteur 2, il est particulièrement intéressant de suivre l'évolution de l'état de santé de ce moteur 2. Un procédé de diagnostic automatique peut ainsi être avantageusement mis en œuvre afin d'effectuer une maintenance prédictive de l'aéronef 1.

Pour mettre en œuvre un tel procédé de diagnostic, l'aéronef 1 comporte alors une pluralité de senseurs 7 permettant d'acquérir des données de vol représentatives d'une pluralité de paramètres physico-chimiques pendant une phase de vol.

Ces senseurs 7 peuvent notamment comporter par exemple des capteurs d'attitude, une centrale inertielle, un système de géolocalisation par satellites, un altimètre par exemple barométrique, des capteurs de température, de pression ou de débit d'un fluide circulant dans l'aéronef 1 ou de l'air environnant l'aéronef 1. Les données de vol acquises peuvent ainsi comporter des attitudes de l'aéronef 1, des vitesses ou accélérations de l'aéronef 1, des altitudes de l'aéronef 1, des vitesses de rotation du moteur, des couples moteur, ainsi que des températures, des pressions ou des débits se rapportant à des fluides circulant dans l'aéronef, dans un moteur ou encore à l'air extérieur.

Par senseur, on entend ici un capteur physique capable de mesurer directement le paramètre en question mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes. En outre, une telle mesure générée par un traitement peut notamment être issue d'un capteur dit « virtuel ».

Les données de vol acquises peuvent alors être stockées dans une mémoire 6 embarquée dans l'aéronef 1.

En outre, l'aéronef 1 peut alors également comporter au moins un contrôleur 5, 35, 105 afin de traiter les données de vol mémorisées dans la mémoire 6.

Un tel contrôleur 5, 35, 105 peut comprendre un ou plusieurs calculateurs et par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

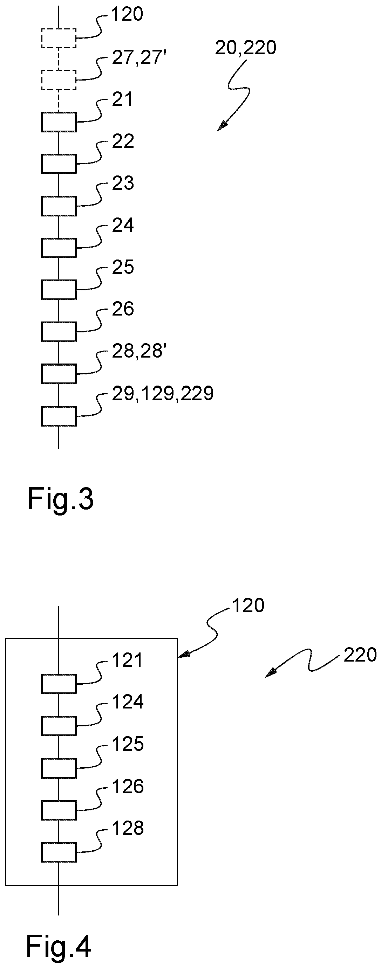

Selon les figures 3 à 9, le traitement mis en œuvre par ce contrôleur 5, 35, 105 sera décrit par la suite plus en détail dans les différentes étapes des procédés de diagnostic automatique. Un tel contrôleur 5 permet en outre de calculer des indices de santé du ou des moteurs 2 à partir des données de vol acquises par les senseurs 7.

Par ailleurs, l'aéronef 1 peut comporter un alerteur 9 permettant de générer un signal d'information en fonction de ces indices de santé moteur calculés et donc de l'état de santé du ou des moteurs 2.

Cet alerteur 9 peut alors permettre de générer une information en fonction des variations des valeurs des indices de santé moteur. Un tel alerteur 9 est en outre apte à générer une première alerte et une deuxième alerte différentes. Chaque alerte peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par un individu.

Tel que représenté à la figure 2, l'invention concerne également un ensemble 11 comportant au moins un aéronef 1, voire un autre aéronef 101, et au moins une station sol 10.

Dans ce cas, l'aéronef 1 comporte alors des moyens de transmission 8 pour transmettre les données de vol mémorisées et stockées dans la mémoire 6 à la ou aux stations sol 10.

De même, l'autre aéronef 101 comporte au moins un autre moteur 2, des autres senseurs 7 pour acquérir des données de vol, une autre mémoire 6 pour stocker ces données de vol et des autres moyens de transmission 8 pour transmettre les données de vol mémorisées et stockées dans l'autre mémoire 6 vers la ou les stations sol 10.

En outre, la ou les stations sol 10 peuvent alors également comporter un contrôleur 15, 115, 135 afin de traiter les données de vol transmises par au moins un aéronef 1, voire également par au moins un autre aéronef 101.

A l'instar du contrôleur 5, 35, 105 embarqué, un tel contrôleur 15, 115, 135 peut comprendre un ou plusieurs calculateurs et par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, ladite au moins une station sol 10 peut comporter un alerteur 19 de l'état de santé dudit au moins un moteur 2, voir également dudit au moins un autre moteur 2.

Cet alerteur 19 peut alors permettre de générer une information en fonction des variations des indices de santé moteur. Un tel alerteur 19 est apte à générer une première alerte et une deuxième alerte différentes. Chaque alerte peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par un individu.

L'alerteur 19 peut également comporter un générateur de graphes permettant de générer une représentation graphique des variations au cours du temps de l'état de santé dudit au moins un moteur 2, voir également dudit au moins un autre moteur 2.

Un technicien en charge de la maintenance des aéronefs 1, 101 peut alors être missionné pour remplacer à brève échéance tout ou partie du ou des moteurs 2, d'une installation de ce ou ces moteurs 2 dans l'aéronef 1, 101, ou plus génériquement du système dégradant les performances du ou des moteurs 2 installés. Une pièce endommagée, usée ou simplement obstruée, tel un filtre, peut alors être remplacée par le technicien en effectuant une opération d'entretien prédictif.

Tel que représenté à la figure 3, l'invention concerne donc également un procédé 20, 220 de diagnostic automatique pour suivre un état de santé du ou des moteurs 2 équipant un aéronef 1.

Tout d'abord, de manière optionnelle, le procédé 20, 220 peut comporter une prédétermination 120 d'un ou plusieurs paramètres d'état prédéterminés. Une telle prédétermination 120 sera décrite plus en détail à la figure 4.

Le procédé 20, 220 comporte alors une acquisition périodique 21 en vol d'une pluralité de données de vol avec les senseurs 7 précédemment décrits puis une identification 22 avec le contrôleur 5, 15, à partir de la pluralité de données de vol, d'au moins une phase de contrôle de santé moteur prédéterminée et un isolement 23 avec le contrôleur 5, 15 d'une séquence de données significatives parmi la pluralité de données de vol produites durant la ou les phases de contrôle de santé moteur.

En outre, de telles données significatives d'une séquence sont alors acquises successivement et de manière sensiblement continue au fil du temps.

Le procédé 20, 220 comporte ensuite pour chaque phase de contrôle de santé moteur, un calcul 24 avec le contrôleur 5, 15 d'au moins un indice de santé moteur en fonction d'au moins un paramètre de contrôle du ou des moteurs 2 parmi la pluralité de paramètres physico-chimiques.

Par exemple, de tels indices de santé moteur peuvent être déterminés en calculant une marge de couple, de puissance ou de température des gaz combustion issus du moteur. Cette marge correspond alors à la différence entre une valeur courante de couple, de puissance ou de température avec une valeur minimale garantie correspondant à un moteur vieilli en prenant en compte les effets dus à l'installation de ce moteur sur l'aéronef.

Le procédé 20, 220 comporte alors, pour chaque indice de santé moteur, une génération 25 avec le contrôleur 5, 15 d'un point d'une cartographie à au moins une dimension, chaque point associant cet indice de santé moteur à au moins une valeur d'au moins un paramètre d'état prédéterminé parmi la pluralité de paramètres physico-chimiques, chaque paramètre d'état prédéterminé correspondant à une dimension de la cartographie. Chaque valeur correspond ainsi respectivement à une valeur dudit au moins un paramètre d'état à un instant de la séquence de données significatives pour lequel l'indice de santé moteur est calculé.

En outre, un tel paramètre d'état prédéterminé peut être identifié lors de l'étape préliminaire 120 du procédé 20, 220.

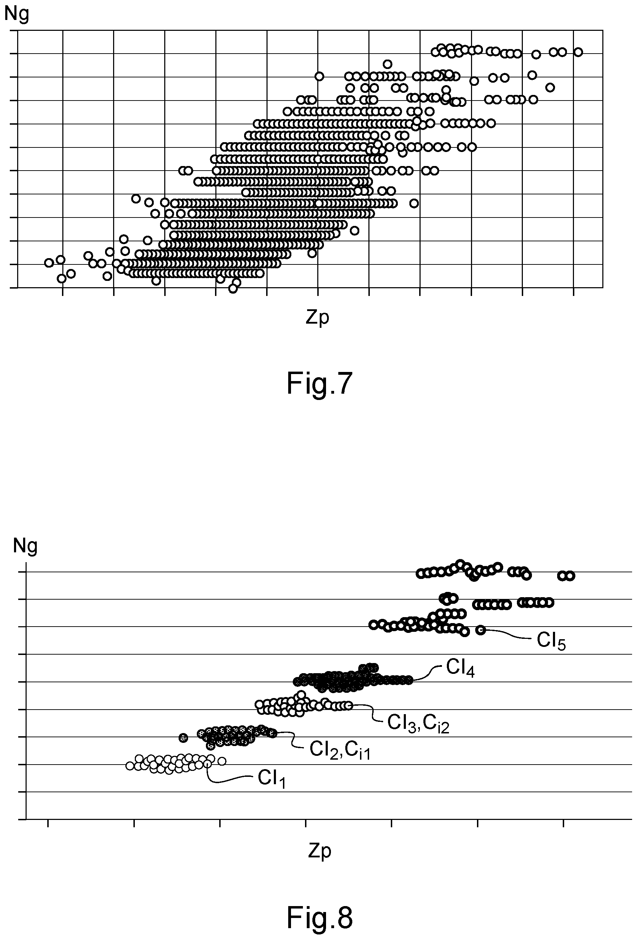

Une cartographie telle que générée à l'étape de génération 25 est illustrée à la figure 7. Cette cartographie est alors par exemple à deux dimensions et comporte en abscisse un premier paramètre d'état prédéterminé tel que l'altitude pression Zp et en ordonnée un second paramètre d'état prédéterminé tel qu'une vitesse de rotation Ng d'un générateur de gaz du moteur 2.

La génération 25 permet ainsi de placer un nuage de points correspondant aux instants des phases de contrôle auxquels des indices de santé moteur ont été calculés.

Le procédé 20, 220 comporte alors ensuite un regroupement 26 avec le contrôleur 5, 15 des points de la cartographie dans au moins une classe d'intérêt Ci1, Ci2 chaque classe d'intérêt Ci1, Ci2 correspondant à un groupe de points espacés les uns des autres dans la cartographie d'une distance maximale prédéterminée.

Un tel regroupement 26 est représenté à la figure 8. Chaque classe intérêt Ci1, Ci2 comporte un certain nombre de points précédemment générés lors de l'étape de génération 25.

Le procédé 20, 220 comporte ensuite une surveillance 28, 28' avec le contrôleur 5, 15 des indices de santé moteur correspondant aux points de la ou des classes d'intérêt Ci1, Ci2.

Préalablement à l'étape de regroupement 26, le procédé 20, 220 peut comporter une identification 27, 27' avec un contrôleur d'identification 35, 135 de la ou des classes d'intérêt Ci1, Ci2 parmi au moins deux classes Cl1, Cl2, Cl3, Cl4, Cl5 distinctes, la ou les classes d'intérêt Ci1, Ci2 étant identifiées en fonction d'au moins un paramètre d'identification choisi parmi le groupe comportant une fréquence d'apparition d'un point dans la ou les classes considérées et une répartition des points dans la cartographie.

Un tel contrôleur d'identification 35, 135 peut être par exemple confondu ou distinct du contrôleur 5, 15. De plus, le contrôleur de d'identification 35 peut être embarqué dans un ou plusieurs aéronefs 1, 101. Le contrôleur d'identification 135 peut quant à lui être agencé dans une ou plusieurs stations sol 10.

En outre, selon un premier exemple de réalisation, cette surveillance 28 des indices de santé moteur peut être réalisée périodiquement avec une période prédéterminée.

Selon un second exemple de réalisation, la surveillance 28' des indices de santé moteur peut être réalisée suite à chaque calcul 24 des indices de santé moteur.

Enfin, le procédé 20, 220 comporte une génération 29, 129, 229 avec l'alerteur 9, 19 du signal d'information en fonction des indices de santé moteur surveillés lors de la surveillance 28, 28'.

Par exemple, la surveillance 28, 28' des indices de santé moteur peut comporter un calcul d'une pente d'une courbe décrite par les indices de santé moteur d'une même classe d'intérêt Ci1, Ci2 en fonction du temps et une comparaison de cette pente avec une valeur de seuil prédéterminée, la génération 29 du signal d'information étant effectuée lorsque la pente franchit cette valeur de seuil prédéterminée.

Selon un autre exemple, la surveillance 28, 28' des indices de santé moteur peut comporter une identification d'une discontinuité d'une courbe décrite par les indices de santé moteur d'une même classe d'intérêt Ci1, Ci2 en fonction du temps, la génération 129 du signal d'information étant effectuée lorsque la discontinuité est identifiée.

Selon un autre exemple, la surveillance 28, 28' des indices de santé moteur peut comporter une comparaison entre les valeurs des indices de santé moteur avec une autre valeur de seuil prédéterminée, la génération 229 du signal d'information étant effectuée lorsqu'une valeur des indices de santé moteur franchit cette autre valeur de seuil prédéterminée.

Telle que représentée à la figure 4, la prédétermination 120 du ou des paramètres d'état prédéterminés peut comporter une acquisition périodique préliminaire 121 durant au moins un vol préliminaire d'une pluralité de données préliminaires de vol avec des senseurs 7. Comme précédemment décrit pour la pluralité de données de vol, la pluralité de données préliminaires de vol est représentative d'une pluralité de paramètres physico-chimiques mesurés en vol.

En outre, une pluralité de vols préliminaires peut être réalisée avec un ou plusieurs aéronefs 1, 101 lors de cette acquisition périodique préliminaire 121.

Un contrôleur de prédétermination 105, 115 peut être par exemple confondu ou distinct du contrôleur 5, 15. De plus, le contrôleur de prédétermination 105 peut être embarqué dans un ou plusieurs aéronefs 1, 101. Le contrôleur de prédétermination 115 peut quant à lui être agencé dans une ou plusieurs stations sol 10.

Dés lors, la prédétermination 120 comporte un calcul 124 avec le contrôleur de prédétermination 105, 115 d'une pluralité d'indices préliminaires de santé moteur en fonction d'une pluralité de valeurs du ou des paramètres de contrôle du ou des moteurs 2 parmi la pluralité de paramètres physico-chimiques.

La prédétermination 120 comporte alors une génération 125 avec le contrôleur de prédétermination 105, 115 d'une base de donnée comportant la pluralité de valeurs du ou des paramètres de contrôle associée à la pluralité d'indices préliminaires de santé moteur correspondante.

Une fois la base de données générée lors de la génération 125, la prédétermination 120 peut mettre en œuvre des opérations de calcul statistique visant à définir une corrélation entre la pluralité de valeurs du ou des paramètres de contrôle et la pluralité d'indices préliminaires de santé moteur.

Par exemple, ces calculs peuvent comprendre un calcul d'une valeur P correspondant à la probabilité pour un modèle statistique donné sous l'hypothèse nulle d'obtenir la même valeur ou une valeur encore plus extrême que celle observée. Un tel calcul permet alors d'identifier si la pluralité d'indices préliminaires de santé moteur calculés est bien significative.

On peut alors classer chaque paramètre de contrôle préliminaire et chaque combinaison de paramètres de contrôle préliminaire en fonction des différentes valeurs P calculées. Pour un même nombre d'un ou plusieurs paramètres de contrôle, on identifie alors le meilleur paramètre de contrôle préliminaire et les meilleures combinaisons de paramètres de contrôle préliminaire qui présentent la valeur P la plus faible correspondant au résultat le plus significatif.

La prédétermination 120 comporte ensuite une génération 126 avec le contrôleur de prédétermination 105, 115, à partir de cette corrélation entre la pluralité d'indices préliminaires de santé moteur et la pluralité de valeurs du ou des paramètres de contrôle du ou des moteurs 2 contenues dans la base de donnée, d'une pluralité de modèles de régression linéaire, chaque modèle de régression linéaire étant associé à un paramètre de contrôle préliminaire ou à une combinaison de plusieurs paramètres de contrôle préliminaire.

Enfin, la prédétermination 120 comporte une identification 128 avec le contrôleur de prédétermination 105, 115 du ou des paramètres d'état prédéterminés parmi le paramètre de contrôle préliminaire ou la combinaison de plusieurs paramètres de contrôle préliminaire correspondant à chaque modèle de régression linéaire, l'identification 128 étant fonction d'une part d'une qualité de prédiction de la pluralité de modèles de régression linéaire et d'autre part d'un nombre de paramètres de contrôle.

Une telle basse de données peut notamment se présenter sous la forme d'une table, d'un tableau ou d'une matrice comportant en colonnes chaque valeur d'un paramètre de contrôle préliminaire et chaque indice préliminaire de santé moteur et chaque ligne correspondant à un instant de mesure de ces paramètres de contrôle préliminaire.

A partir de toutes ces lignes de la base de donnée, on peut alors effectuer une corrélation et on calcule un coefficient de détermination appelé score $R^2$. Un tel score $R^2$ permet alors d'estimer la qualité de prédiction de chacune des régressions linaires correspondantes.

On peut notamment classer les scores $R^2$ calculés et choisir le plus grand score $R^2$ ou, si deux scores $R^2$ maximum sont proches l'un de l'autre, choisir le score $R^2$ correspondant à la combinaison de paramètres de contrôle comportant le plus petit nombre de paramètres de contrôle.

Par exemple, si une combinaison de deux paramètres de contrôle A et C obtient un score de 95% et une combinaison de trois paramètres de contrôle A, B et C obtient un score $R^2$ de 96%, on peut privilégier la combinaison des deux paramètres de contrôle A et C car plus simple et nécessitant moins de calculs pour suivre un état de santé du ou des moteurs 2 équipant un aéronef 1, 101.

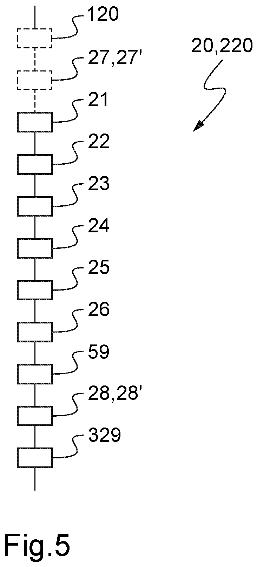

Telle que représentée à la figure 5, le procédé 20, 220 peut comporter, pour chaque classe, une détermination d'un barycentre des points et une pondération 59 assignant un poids à chaque indice de santé moteur, le poids étant fonction d'une distance séparant le ou les points du barycentre. Dans ce cas, la surveillance 28, 28' des indices de santé moteur peut être mise en œuvre sous la dépendance des poids de chaque indice de santé moteur en réalisant une courbe pondérée représentative des indices de santé moteur et des poids associés.

La génération 329 du signal d'information est alors effectuée lorsqu'une pente de la courbe pondérée est inférieure à une valeur de seuil prédéterminée, lorsqu'une discontinuité de la courbe pondérée est identifiée ou lorsqu'une valeur pondérée des indices de santé moteur franchit une autre valeur de seuil prédéterminée.

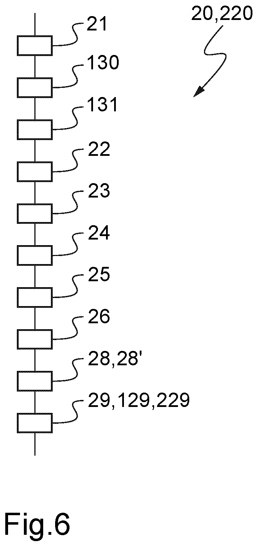

Tel que représenté à la figure 6, le procédé 20, 220 peut également comporter une mémorisation 130 de la pluralité de données de vol dans la mémoire 6 embarquée dans l'aéronef 1 pendant la phase de vol de l'aéronef 1.

De manière alternative ou complémentaire, le procédé 20, 220 peut également comporter une transmission 131 de la pluralité de données de vol de l'aéronef 1 vers au moins une station sol 10.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé (20, 220) de diagnostic automatique pour suivre un état de santé d'au moins un moteur (2) équipant un aéronef (1), ledit procédé (20, 220) comportant les étapes suivantes :

   • acquisition périodique (21) en vol d'une pluralité de données de vol avec des senseurs (7), ladite pluralité de données de vol étant représentative d'une pluralité de paramètres physico-chimiques,
   • identification (22) avec un contrôleur (5, 15), à partir de ladite pluralité de données de vol, d'au moins une phase de contrôle de santé moteur prédéterminée et isolement (23) avec ledit contrôleur (5, 15) d'une séquence de données significatives parmi ladite pluralité de données de vol produites durant ladite au moins une phase de contrôle de santé moteur, lesdites données significatives d'une séquence étant acquises successivement, et
   • pour chaque phase de contrôle de santé moteur, calcul (24) avec ledit contrôleur (5, 15) d'au moins un indice de santé moteur en fonction d'au moins un paramètre de contrôle dudit au moins un moteur (2) parmi ladite pluralité de paramètres physico-chimiques,

   **caractérisé en ce que** ledit procédé (20, 220) comporte les étapes suivantes :

   • pour chaque indice de santé moteur, génération (25) avec ledit contrôleur (5, 15) d'un point d'une cartographie à au moins une dimension, chaque point associant ledit indice de santé moteur à au moins une valeur d'au moins un paramètre d'état prédéterminé parmi ladite pluralité de paramètres physico-chimiques, chaque paramètre d'état prédéterminé correspondant à une dimension de ladite cartographie, chaque valeur correspondant respectivement à une valeur dudit au moins un paramètre d'état à un instant de ladite séquence de données significatives pour lequel ledit indice de santé moteur est calculé,
   • regroupement (26) avec ledit contrôleur (5, 15) desdits points de ladite cartographie dans au moins une classe d'intérêt (Ci1, Ci2), chaque classe d'intérêt (Ci1, Ci2) correspondant à un groupe de points espacés les uns des autres dans ladite cartographie d'une distance maximale prédéterminée,
   • surveillance (28, 28') avec ledit contrôleur (5, 15) desdits indices de santé moteur correspondant auxdits points de ladite au moins une classe d'intérêt (Ci1, Ci2), et
   • génération (29, 129, 229, 329) avec un alerteur (9, 19) d'un signal d'information en fonction desdits indices de santé moteur surveillés lors de ladite surveillance (28, 28').

2. Procédé (220) selon la revendication 1, où ledit procédé (220) comporte une identification (27, 27') avec un contrôleur d'identification (35, 135) de ladite au moins une classe d'intérêt (Ci1, Ci2) parmi au moins deux classes (Cl1, Cl2, Cl3, Cl4, Cl5) distinctes, ladite au moins une classe d'intérêt (Ci1, Ci2) étant identifiée en fonction d'au moins un paramètre d'identification choisi parmi le groupe comportant une fréquence d'apparition d'un point dans ladite au moins une classe d'intérêt (Ci1, Ci2) considérée et une répartition desdits points dans ladite cartographie.

3. Procédé (220) selon l'une quelconque des revendications 1 à 2, où ledit procédé (220) comporte une prédétermination (120) dudit au moins un paramètre d'état prédéterminé, ladite prédétermination (120) comportant les sous étapes suivantes :

   • acquisition périodique préliminaire (121) durant au moins un vol préliminaire d'une pluralité de données préliminaires de vol avec des senseurs (7), ladite pluralité de données préliminaires de vol étant représentative d'une pluralité de paramètres physico-chimiques,
   • calcul (124) avec ledit contrôleur de prédétermination (105, 115) d'une pluralité d'indices préliminaires de santé moteur en fonction d'une pluralité de valeurs d'au moins un paramètre de contrôle préliminaire dudit au moins un moteur (2) parmi ladite pluralité de paramètres physico-chimiques,
   • génération (125) avec ledit contrôleur de prédétermination (105, 115) d'une base de donnée comportant ladite pluralité de valeurs dudit au moins un paramètre de contrôle préliminaire associée à ladite pluralité d'indices préliminaires de santé moteur correspondante,
   • génération (126) avec ledit contrôleur de prédétermination (105, 115), à partir d'une corrélation entre ladite pluralité d'indices préliminaires de santé moteur et ladite pluralité de valeurs dudit au moins un paramètre de contrôle préliminaire dudit au moins un moteur (2) contenues dans ladite base de donnée, d'une pluralité de modèles de régression linéaire, chaque modèle de régression linéaire étant associé à un paramètre de contrôle préliminaire ou à une combinaison de plusieurs paramètres de contrôle préliminaire,

• identification (128) avec ledit contrôleur de prédétermination (105, 115) dudit au moins un paramètre d'état prédéterminé parmi ledit paramètre de contrôle préliminaire ou ladite combinaison de plusieurs paramètres de contrôle préliminaire correspondant à chaque modèle de régression linéaire, ladite identification (128) étant fonction d'une part d'une qualité de prédiction de ladite pluralité de modèles de régression linéaire et d'autre part d'un nombre de paramètres de contrôle.

4. Procédé (220) selon la revendication 3, où ledit au moins un vol préliminaire comporte une pluralité de vols réalisés avec un ou plusieurs aéronefs (1, 101).

5. Procédé (20, 220) selon l'une quelconque des revendications 1 à 4, où ladite surveillance (28, 28') desdits indices de santé moteur comporte un calcul d'une pente d'une courbe décrite par lesdits indices de santé moteur d'une même classe d'intérêt Ci1, Ci2 en fonction du temps et une comparaison de ladite pente avec une valeur de seuil prédéterminée, ladite génération (29) dudit signal d'information étant effectuée lorsque ladite pente franchit ladite valeur de seuil prédéterminée.

6. Procédé (20, 220) selon l'une quelconque des revendications 1 à 5, où ladite surveillance (28, 28') desdits indices de santé moteur comporte une identification d'une discontinuité d'une courbe décrite par lesdits indices de santé moteur d'une même classe d'intérêt (Ci1, Ci2) en fonction du temps, ladite génération (129) dudit signal d'information étant effectuée lorsque ladite discontinuité est identifiée.

7. Procédé (20, 220) selon l'une quelconque des revendications 1 à 6, où ladite surveillance (28, 28') des indices de santé moteur comporte une comparaison entre une valeur des indices de santé moteur et une autre valeur de seuil prédéterminée, ladite génération (229) du signal d'information étant effectuée lorsque ladite valeur des indices de santé moteur franchit ladite autre valeur de seuil prédéterminée.

8. Procédé (20, 220) selon l'une quelconque des revendications 1 à 7, où ladite surveillance (28) desdits indices de santé moteur est réalisée périodiquement avec une période prédéterminée.

9. Procédé (20, 220) selon l'une quelconque des revendications 1 à 7, où ladite surveillance (28') desdits indices de santé moteur est réalisée suite à chaque calcul (24) desdits indices de santé moteur.

10. Procédé (20, 220) selon l'une quelconque des revendications 1 à 9, où ledit procédé (20, 220) comporte, pour chaque classe, une détermination d'un barycentre desdits points et une pondération (59) assignant un poids à chaque indice de santé moteur, ledit poids étant fonction d'au moins une distance séparant ledit au moins un point dudit barycentre, ladite surveillance (28, 28') desdits indices de santé moteur étant opérée sous la dépendance desdits poids de chaque indice de santé moteur en réalisant une courbe pondérée représentative des indices de santé moteur et desdits poids associés, ladite génération (329) dudit signal d'information étant effectuée lorsqu'une pente de ladite courbe pondérée franchit une valeur de seuil prédéterminée, lorsqu'une discontinuité de ladite courbe pondérée est identifiée ou lorsqu'une valeur pondérée des indices de santé moteur franchit une autre valeur de seuil prédéterminée.

11. Procédé (20, 220) selon l'une quelconque des revendications 1 à 10, où ledit procédé (20, 220) comporte une mémorisation (130) de ladite pluralité de données de vol dans une mémoire (6) embarquée dans ledit aéronef (1) pendant ladite phase de vol dudit aéronef (1).

12. Procédé (20, 220) selon l'une quelconque des revendications 1 à 11, où ledit procédé (20, 220) comporte une transmission (131) de ladite pluralité de données de vol dudit aéronef (1) vers au moins une station sol (10).

13. Aéronef (1) équipé d'au moins un moteur (2), de senseurs (7) pour acquérir une pluralité de données de vol, d'un contrôleur (5) et d'un alerteur (9), **caractérisé en ce que** lesdits senseurs (7), ledit contrôleur (5) et ledit alerteur (9) dudit aéronef (1) sont configurés pour mettre en œuvre ledit procédé (20) de diagnostic automatique selon l'une quelconque des revendications 1 à 12.

14. Ensemble (11) comportant au moins une station sol (10) et au moins un aéronef (1, 101) équipé d'au moins un moteur (2) et de senseurs (7) pour acquérir une pluralité de données de vol, ladite au moins une station sol (10) comportant un contrôleur (15) et un alerteur (19), **caractérisé en ce que** lesdits senseurs (7), ledit contrôleur (15) et ledit alerteur (19) dudit ensemble (11) sont configurés pour mettre en œuvre ledit procédé (20) de diagnostic automatique selon l'une quelconque des revendications 1 à 12.

## Patentansprüche

1. Automatisches Diagnoseverfahren (20, 220) zur Überwachung eines Gesundheitszustands mindestens eines Triebwerks (2), mit dem ein Luftfahrzeug (1) ausgerüstet ist, wobei das Verfahren (20, 220) die folgenden Schritte umfasst:

    • periodisches Erfassen (21) einer Mehrzahl von Flugdaten mit Sensoren (7) während des Fluges, wobei die Mehrzahl von Flugdaten für eine Mehrzahl von physikalisch-chemischen Parametern repräsentativ ist,
    • Identifizieren (22), mit einer Steuereinheit (5, 15), mindestens einer vorgegebenen Phase der Motorgesundheitskontrolle anhand der Mehrzahl von Flugdaten und Isolieren (23), mit der Steuereinheit (5, 15), einer Folge von signifikanten Daten aus der Mehrzahl von während der mindestens einen Phase der Motorgesundheitskontrolle erzeugten Flugdaten, wobei die signifikanten Daten einer Folge nacheinander erfasst werden, und
    • für jede Phase der Motorgesundheitskontrolle, Berechnen (24) von mindestens einem Motorgesundheitsindex als Funktion von mindestens einem Kontrollparameter des mindestens einen Triebwerks (2) aus der Mehrzahl von physikalisch-chemischen Parametern mit der Steuereinheit (5, 15),

    **dadurch gekennzeichnet, dass** das Verfahren (20, 220) die folgenden Schritte umfasst:

    • für jeden Motorgesundheitsindex, Erzeugen (25) eines Punktes einer mindestens eindimensionalen Kartierung mit der Steuereinheit (5, 15), wobei jeder Punkt den Motorgesundheitsindex mit mindestens einem Wert von mindestens einem vorgegebenen Zustandsparameter aus der Mehrzahl von physikalisch-chemischen Parametern verknüpft, wobei jeder vorgegebene Zustandsparameter einer Dimension der Kartierung entspricht, wobei jeder Wert jeweils einem Wert des mindestens einen Zustandsparameters zu einem Zeitpunkt der Folge von signifikanten Daten entspricht, für den der Motorgesundheitsindex berechnet wird,
    • Zusammenfassen (26) der Punkte der Kartierung mit der Steuereinheit (5, 15) zu mindestens einer Klasse von Interesse (Ci1, Ci2), wobei jede Klasse von Interesse (Ci1, Ci2) einer Gruppe von Punkten entspricht, die in der Kartierung um einen vorgegebenen maximalen Abstand voneinander beabstandet sind,
    • Überwachen (28, 28') der den Punkten in der mindestens einen Klasse von Interesse (Ci1, Ci2) entsprechenden Motorgesundheitsindizes mit der Steuereinheit (5, 15), und
    • Erzeugen (29, 129, 229, 329) eines Informationssignals mit einem Alarmgeber (9, 19) in Abhängigkeit von den während des Überwachens (28, 28') überwachten Motorgesundheitsindizes.

2. Verfahren (220) nach Anspruch 1, wobei das Verfahren (220) ein Identifizieren (27, 27') der mindestens einen Klasse von Interesse (Ci1, Ci2) aus mindestens zwei verschiedenen Klassen (CI1, CI2, CI3, CI4, CI5) mit einer Identifikationssteuereinheit (35, 135) umfasst, wobei die mindestens eine Klasse von Interesse (Ci1, Ci2) in Abhängigkeit von mindestens einem Identifikationsparameter identifiziert wird, der aus der Gruppe ausgewählt ist, die eine Häufigkeit des Auftretens eines Punktes in der mindestens einen betrachteten Klasse von Interesse (Ci1, Ci2) und eine Verteilung der Punkte in der Kartierung umfasst.

3. Verfahren (220) nach einem der Ansprüche 1 bis 2, wobei das Verfahren (220) ein Vorabbestimmen (120) des mindestens einen vorgegebenen Zustandsparameters umfasst, wobei das Vorabbestimmen (120) die folgenden Unterschritte umfasst:

    • periodisches Voraberfassen (121) einer Mehrzahl von Vorabflugdaten mit Sensoren (7) während mindestens eines Vorabflugs, wobei die Mehrzahl von Vorabflugdaten repräsentativ für eine Mehrzahl von physikalisch-chemischen Parametern ist,
    • Berechnen (124), mit der Vorabbestimmungssteuereinheit (105, 115), einer Mehrzahl von Vorabtriebwerksgesundheitsindizes als Funktion einer Mehrzahl von Werten von mindestens einem Vorabkontrollparameter des mindestens einen Triebwerks (2) aus der Mehrzahl von physikalisch-chemischen Parametern,
    • Erzeugen (125), mit der Vorabbestimmungssteuereinheit (105, 115), einer Datenbank, die die Mehrzahl von Werten des mindestens einen Vorabkontrollparameters enthält, der mit der entsprechenden Mehrzahl von Vorabmotorgesundheitsindizes verknüpft ist,
    • Erzeugen (126) einer Mehrzahl von linearen Regressionsmodellen mit der Vorabbestimmungssteuereinheit (105, 115) aus einer Korrelation zwischen der Mehrzahl von Vorabmotorgesundheitsindizes und der Mehrzahl von Werten des mindestens einen Vorabkontrollparameters des mindestens einen Triebwerks (2), die in der Datenbank enthalten sind, wobei jedes lineare Regressionsmodell mit einem Vorabkontrollparameter oder einer Kombination mehrerer Vorabkontrollparameter verknüpft ist,
    • Identifizieren (128), mit der Vorabbestimmungssteuereinheit (105, 115), des mindestens einen vorgegebenen Zustandsparameters aus dem Vorabkontrollparameter oder der Kombination mehrerer Vorabkontrollparameter, der/die jedem linearen Regressionsmodell entsprechen, wobei die Identifikation (128) einerseits von einer Vorhersagequalität der Mehrzahl von linearen Regressionsmodellen und andererseits von einer Anzahl von Kontrollparametern abhängig ist.

4. Verfahren (220) nach Anspruch 3, bei dem der mindestens eine Vorabflug eine Mehrzahl von mit einem oder mehreren Luftfahrzeugen (1, 101) durchgeführten Flügen umfasst.

5. Verfahren (20, 220) nach einem der Ansprüche 1 bis 4, bei dem das Überwachen (28, 28') der Motorgesundheitsindizes ein Berechnen einer Steigung einer Kurve, die durch die Motorgesundheitsindizes einer gleichen Klasse von Interesse Ci1, Ci2 als Funktion der Zeit beschrieben wird, und ein Vergleichen der Steigung mit einem vorgegebenen Schwellenwert umfasst, wobei das Erzeugen (29) des Informationssignals durchgeführt wird, wenn die Steigung den vorgegebenen Schwellenwert übersteigt.

6. Verfahren (20, 220) nach einem der Ansprüche 1 bis 5, bei dem das Überwachen (28, 28') der Motorgesundheitsindizes das Identifizieren einer Unstetigkeit einer durch die Motorgesundheitsindizes einer gleichen Klasse von Interesse (Ci1, Ci2) als Funktion der Zeit beschriebenen Kurve umfasst, wobei das Erzeugen (129) des Informationssignals durchgeführt wird, wenn die Unstetigkeit identifiziert wird.

7. Verfahren (20, 220) nach einem der Ansprüche 1 bis 6, bei dem das Überwachen (28, 28') der Motorgesundheitsindizes ein Vergleichen zwischen einem Wert der Motorgesundheitsindizes und einem weiteren vorgegebenen Schwellenwert umfasst, wobei das Erzeugen (229) des Informationssignals durchgeführt wird, wenn der Wert der Motorgesundheitsindizes den weiteren vorgegebenen Schwellenwert überschreitet.

8. Verfahren (20, 220) nach einem der Ansprüche 1 bis 7, bei dem das Überwachen (28) der Motorgesundheitsindizes periodisch mit einer vorbestimmten Periode durchgeführt wird.

9. Verfahren (20, 220) nach einem der Ansprüche 1 bis 7, bei dem das Überwachen (28') der Motorgesundheitsindizes im Anschluss an jedes Berechnen (24) der Motorgesundheitsindizes durchgeführt wird.

10. Verfahren (20, 220) nach einem der Ansprüche 1 bis 9, wobei das Verfahren (20, 220) für jede Klasse ein Bestimmen eines Schwerpunkts der Punkte und ein Gewichten (59) umfasst, das jedem Motorgesundheitsindex ein Gewicht zuweist, wobei das Gewicht von mindestens einem Abstand abhängt, der den mindestens einen Punkt von dem Schwerpunkt trennt, wobei das Überwachen (28, 28') der Motorgesundheitsindizes in Abhängigkeit von den Gewichten jedes Motorgesundheitsindex durchgeführt wird, indem eine für die Motorgesundheitsindizes und die zugehörigen Gewichte repräsentative gewichtete Kurve erstellt wird, wobei das Erzeugen (329) des Informationssignals durchgeführt wird, wenn eine Steigung der gewichteten Kurve einen vorgegebenen Schwellenwert überschreitet, wenn eine Diskontinuität der gewichteten Kurve identifiziert wird oder wenn ein gewichteter Wert der motorischen Gesundheitsindizes einen anderen vorgegebenen Schwellenwert überschreitet.

11. Verfahren (20, 220) nach einem der Ansprüche 1 bis 10, wobei das Verfahren (20, 220) ein Speichern (130) der Mehrzahl von Flugdaten in einem Speicher (6) an Bord des Luftfahrzeugs (1) während der Flugphase des Luftfahrzeugs (1) umfasst.

12. Verfahren (20, 220) nach einem der Ansprüche 1 bis 11, wobei das Verfahren (20, 220) ein Übertragen (131) der Mehrzahl von Flugdaten des Luftfahrzeugs (1) an mindestens eine Bodenstation (10) umfasst.

13. Luftfahrzeug (1), das mit mindestens einem Triebwerk (2), Sensoren (7) zum Erfassen einer Mehrzahl von Flugdaten, einer Steuereinheit (5) und einem Alarmgeber (9) ausgestattet ist, **dadurch gekennzeichnet, dass** die Sensoren (7), der Controller (5) und der Alarmgeber (9) des Luftfahrzeugs (1) konfiguriert sind, um das automatische Diagnoseverfahren (20) nach einem der Ansprüche 1 bis 12 zu implementieren.

14. Anordnung (11) mit mindestens einer Bodenstation (10) und mindestens einem Luftfahrzeug (1, 101), das mit mindestens einem Triebwerk (2) und Sensoren (7) zum Erfassen einer Mehrzahl von Flugdaten ausgestattet ist, wobei die mindestens eine Bodenstation (10) eine Steuereinheit (15) und einen Alarmgeber (19) aufweist, **dadurch gekennzeichnet, dass** die Sensoren (7), der Controller (15) und der Alarmgeber (19) der Anordnung (11) konfiguriert sind, um das automatische Diagnoseverfahren (20) nach einem der Ansprüche 1 bis 12 durchzuführen.

**Claims**

1. Automatic diagnostic method (20, 220) for monitoring a state of health of at least one engine (2) equipping an aircraft (1), said method (20, 220) including the following steps:

> • periodic in-flight acquisition (21) of a plurality of flight data using sensors (7), said plurality of flight data being representative of a plurality of physiochemical parameters,
> • identifying (22) using a controller (5, 15), based on said plurality of flight data, at least one predetermined engine health control phase and isolating (23) using said controller (5, 15) a sequence of meaningful data from among said plurality of flight data produced during said at least one engine health control phase, said meaningful data of a sequence being acquired successively, and
> • for each engine health control phase, calculating (24) using said controller (5, 15) at least one engine health index as a function of at least one control parameter of said at least one engine (2) from among said plurality of physiochemical parameters,

**characterized in that** said method (20, 220) includes the following steps:

> • for each engine health index, generating (25) using said controller (5, 15) a point of a map with at least one dimension, each point associating said engine health index with at least one value of at least one predetermined state parameter from among said plurality of physiochemical parameters, each predetermined state parameter corresponding to a dimension of said map, each value corresponding respectively to a value of said at least one state parameter at a moment of said sequence of meaningful data for which said engine health index is calculated,
> • grouping (26) using said controller (5, 15) said points of said map into at least one class of interest (Ci1, Ci2), each class of interest (Ci1, Ci2) corresponding to a group of points spaced apart from one another in said map by a predetermined maximum distance,
> • monitoring (28, 28') using said controller (5, 15) said engine health indices corresponding to said points of said at least one class of interest (Ci1, Ci2), and
> • generating (29, 129, 229, 329) using an alerting device (9, 19) an information signal as a function of said engine health indices monitored during said monitoring (28, 28').

2. Method (220) according to Claim 1, where said method (220) includes identifying (27, 27') using an identification controller (35, 135) said at least one class of interest (Ci1, Ci2) from among at least two separate classes (CI1, CI2, CI3, CI4, CI5), said at least one class of interest (Ci1, Ci2) being identified as a function of at least one identification parameter chosen from among the group including an appearance frequency of a point in said at least one class of interest (Ci1, Ci2) under consideration and distribution of said points in said map.

3. Method according to either one of Claims 1 or 2, where the method (220) includes predetermining (120) said at least one predetermined state parameter, said predetermination (120) including the following sub-steps:

> • preliminary periodic acquisition (121) during at least one preliminary flight of a plurality of preliminary flight data using sensors (7), said plurality of preliminary flight data being representative of a plurality of physiochemical parameters,
> • calculating (124) using said predetermination controller (105, 115) a plurality of preliminary engine health indices as a function of a plurality of values of at least one preliminary control parameter of said at least one engine (2) from among said plurality of physiochemical parameters,
> • generating (125) using said predetermination controller (105, 115) a database including said plurality of values of said at least one preliminary control parameter associated with said corresponding plurality of preliminary engine health indices,
> • generating (126) using said predetermination controller (105, 115), based on a correlation between said plurality of preliminary engine health indices and said plurality of values of said at least one preliminary control parameter of said at least one engine (2) included in said database, a plurality of linear regression models, each linear regression model being associated with a preliminary control parameter or with a combination of several preliminary control parameters,
> • identifying (128) using said predetermination controller (105, 115) said at least one predetermined state parameter from among said preliminary control parameter or said combination of several preliminary control parameters corresponding to each linear regression model, said identification (128) being a function, on the one hand, of a prediction quality of said plurality of linear regression models and, on the other hand, of a number of control parameters.

4. Method (220) according to Claim 3, where at least one preliminary flight includes a plurality of flights made with one or more aircraft (1, 101).

5. Method (20, 220) according to one of Claims 1 to 4, where said monitoring (28, 28') of said engine health indices includes calculating a slope of a curve described by said engine health indices of a same class of interest Ci1, Ci2 as a function of time and comparing said slope with a predetermined threshold value, said generation (29) of said information signal being carried out when said slope crosses said predetermined threshold value.

6. Method (20, 220) according to one of Claims 1 to 5, where said monitoring (28, 28') of said engine health indices includes identifying discontinuity of a curve described by said engine health indices of a same class of interest Ci1, Ci2 as a function of time, said generation (129) of said information signal being carried out when said discontinuity is identified.

7. Method (20, 220) according to one of Claims 1 to 6, where said monitoring (28, 28') of the engine health indices includes a comparison between an engine health index value and another predetermined threshold value, said generation (229) of the information signal being carried out when said engine health index value crosses said other predetermined threshold value.

8. Method (20, 220) according to one of Claims 1 to 7, where said monitoring (28) of said engine health indices is performed periodically with a predetermined period.

9. Method (20, 220) according to one of Claims 1 to 7, where said monitoring (28') of said engine health indices is performed following each calculation (24) of said engine health indices.

10. Method (20, 220) according to one of Claims 1 to 9, where said method (20, 220) includes, for each class, determining a barycentre of said points and a weighting (59) assigning a weight to each engine health index, said weight being a function of at least one distance separating said at least one point from said barycentre, said monitoring (28, 28') of said engine health indices being carried out dependant on said weights of each engine health index by producing a weighted curve representing the engine health indices and said associated weights, said generation (329) of said information signal being carried out when a slope of said weighted curve crosses a predetermined threshold value, when discontinuity of said weighted curve is identified or when a weighted value of the engine health indices crosses another predetermined threshold value.

11. Method (20, 220) according to one of Claims 1 to 10, where said method (20, 220) includes storing (130) said plurality of flight data in a memory (6) on board said aircraft (1) during said flight phase of said aircraft (1).

12. Method (20, 220) according to one of Claims 1 to 11, where said method (20, 220) includes transmitting (131) said plurality of flight data from said aircraft (10) to at least one ground station (10).

13. Aircraft (1) equipped with at least one engine (2), sensors (7) for acquiring a plurality of flight data, a controller (5) and an alerting device (9), **characterized in that** said sensors (7), said controller (5) and said alerting device (9) of said aircraft (1) are designed to implement said automatic diagnostic method (20) according to one of Claims 1 to 12.

14. Assembly (11) including at least one ground station (10) and at least one aircraft (1, 101) equipped with at least one engine (2) and sensors (7) for acquiring a plurality of flight data, said at least one ground station (10) including a controller (15) and an alerting device (19), **characterized in that** said sensors (7), said controller (15) and said alerting device (19) of said assembly (11) are designed to implement said automatic diagnostic method (20) according to one of Claims 1 to 12.

Fig.1

Fig.2

120

27,27'

20,220

21

22

23

24

25

26

28,28'

29,129,229

# Fig.3

120

220

121

124

125

126

128

# Fig.4

Fig.5

20,220

21

130

131

22

23

24

25

26

28,28'

29,129,229

Fig.6

Ng

Zp

Fig.7

Ng

$Cl_5$

$Cl_4$

$Cl_3, C_{i2}$

$Cl_2, C_{i1}$

$Cl_1$

Zp

Fig.8

**RÉFÉRENCES CITÉES DANS LA DESCRIPTION**

**Documents brevets cités dans la description**

- EP 2623748 A
- EP 3217242 A
- FR 3006785